Europäisches Patentamt

European Patent Office

Office européen des brevets

(11) Veröffentlichungsnummer: **0 160 687**

**B1**

# (12) EUROPÄISCHE PATENTSCHRIFT

(45) Veröffentlichungstag der Patentschrift:
24.02.88

(51) Int. Cl.⁴: **B 23 K 9/32**

(21) Anmeldenummer: **84904090.2**

(22) Anmeldetag: **29.10.84**

(86) Internationale Anmeldenummer:
**PCT/DE 84/00224**

(87) Internationale Veröffentlichungsnummer:
**WO 85/01905 (09.05.85 Gazette 85/11)**

(54) **VORRICHTUNG ZUM ÜBERWACHEN EINES SCHWEISSVORGANGES.**

(30) Priorität: **28.10.83 DE 3339182**

(43) Veröffentlichungstag der Anmeldung:
**13.11.85 Patentblatt 85/46**

(45) Bekanntmachung des Hinweises auf die Patenterteilung:
**24.02.88 Patentblatt 88/8**

(84) Benannte Vertragsstaaten:
**BE FR GB LU NL**

(56) Entgegenhaltungen:
**EP-A-0 018 781**

**Patents Abstracts of Japan, Band 7, Nr. 68, 19. März 1983, Seite (M201)(1213)**
**Automatic Welding, Band 28, Nr. 2, Februar 1975, Cambridge (GB), V.K. Lebedev: "Research into the possibility of using a photo-electric sensing element for controlling penetration in the arc welding of light alloys", Seiten 18-20**
**Schweissen und Schneiden, Jahrgang 18, Heft 2, Februar 1966, Düsseldorf (DE), Otto Becken: "Versuch einer Fernsehübertragung des Schweissvorganges", Seiten 60-63**
**Patents Abstracts of Japan, Band 7, Nr. 71, 24. März 1983, Seite (M-202)(1216)**
**Patents Abstracts of Japan, Band 7, Nr. 283, 16. Dezember 1983, Seite (M-263)(1428)**
**Patents Abstracts of Japan, Band 7, Nr. 55, 5. März**

(73) Patentinhaber: **Schäfter & Kirchhoff, Celsiusweg 15, D-2000 Hamburg 50 (DE)**

(72) Erfinder: **FEDERAU, Gregor, Eichenstr. 86, D-2000 Hamburg 19 (DE)**
Erfinder: **DRESSLER, Max- Helmut, Dorotheenstr. 41, D-2000 Hamburg 60 (DE)**
Erfinder: **AHRENS, Dirk, Richthofenstrasse 1, D-2082 Uetersen (DE)**

(74) Vertreter: **Dipl.- Ing. H. Hauck Dipl.- Phys. W. Schmitz Dipl.- Ing. E. Graalfs Dipl.- Ing. W. Wehnert Dr.- Ing. W. Döring, Neuer Wall 41, D-2000 Hamburg 36 (DE)**

(56) Entgegenhaltungen: (Fortsetzung)
**1983, Seite (M-198)(1200)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung nach dem Oberbegriff des Anspruchs 1.

Die Überwachung, insbesondere Fernbeobachtung, von Schweißvorgängen mit einer Kamera bereitet Schwierigkeiten, weil der Dynamikumfang von Fernsehkameras bei weitem nicht zur Verarbeitung der sehr großen Leuchtdichte-Unterschiede ausreicht, die beim Schweißen im Arbeitsbereich vorliegen; überdies soll aber in der Regel der Arbeitsbereich überwacht und beobachtet werden können, wenn kein Schweißvorgang abläuft. Die Überwachung und Beobachtung von Schweißvorgängen mit Hilfe von Kameras, insbesondere Fernsehkameras, ist jedoch sehr häufig dringend erwünscht oder sogar unbedingt erforderlich, um an unzugänglichen Einsatzorten, zum Beispiel im Reaktorbereich von Kernkraftwerken, den richtigen Ablauf des Schweißvorganges und die Qualität der hergestellten Schweißnaht überwachen zu können.

Bei bekannten Vorrichtungen der eingangs angegebenen Art wird zur Bekämpfung der beschriebenen Schwierigkeiten der Kamera ein optisches Filter zum Abschwächen der Strahlung vorgeschaltet. Dies entspricht im wesentlichen der von der manuellen Schweißtechnik her bekannten Verwendung von dunklen Schweißschutzgläsern, die den Schweißer vor zu starker Ultraviolett-Strahlung schützen, wie sie insbesondere beim elektrischen Lichtbogenschweißen von dem Lichtbogen ausgehen, und im sichtbaren Bereich des Spektrums die von der Schweißstelle emittierte Strahlung so weit dämpfen, daß die Schweißstelle ohne Blendgefahr beobachtet werden kann. Auch bei Verwendung derartiger Abschwächungs-Filter ist jedoch das in dem Bild des Arbeitsbereichs noch vorliegende maximale Leuchtdichten-Verhältnis so hoch, daß die Dynamik einer Fernsehkamera bei weitem nicht ausreicht. Das gilt insbesondere für das Lichtbogen- oder Plasma-Schweißen.

Es ist deshalb ferner versucht worden, das in dem Bild des Arbeitsbereichs auftretende maximale Leuchtdichten-Verhältnis dadurch herabzusetzen, daß man den Arbeitsbereich mit einer Beleuchtungseinrichtung entsprechend stark anstrahlt; zusätzlich wird dabei gewöhnlich noch ein optisches Filter zum Abschwächen der Gesamtstrahlung, beispielsweise in Form eines Graufilters der Kamera vorgeschaltet. Es leuchtet ein, daß bei diesem Verfahren eine ausreichende Verkleinerung des maximalen Leuchtdichte-Verhältnisses im Arbeitsbereich nur durch eine sehr starke Zusatzbeleuchtung erzielt werden kann. Dies erfordert sehr viel Leistung und vergrößert die aus dem Arbeitsbereich abzuführende Wärmeleistung in höchst unerwünschter Weise.

Die Erfindung geht deshalb von der Aufgabe aus, eine zur Fernsehüberwachung geeignete Vorrichtung zum Überwachen eines in einem Arbeitsbereich ablaufenden Schweißvorganges zu schaffen, bei der mit geringem Aufwand das in dem Bild des Arbeitsbereiches auftretende maximale Leuchtdichten-Verhältnis auf einen Wert herabgesetzt ist, der von üblichen Kameras, insbesondere Fernsehkameras, ohne Übersteuerungsgefahr verarbeitet werden kann.

Nach der Erfindung wird diese Aufgabe gelöst mit der Vorrichtung nach dem Anspruch 1.

Bei der erfindungsgemäßen Vorrichtung wird ausgenutzt, daß die Leuchtdichte von Schweiß-Plasmen im nahen Infrarot nur mäßig ist, so daß bei Beschränkung der Kameraempfindlichkeit auf das nahe Infrarot nur der im nahen Infrarot vorliegende Maximalwert des Leuchtdichte-Verhältnisses der im Arbeitsbereich erhitzten Werkstoffe zu verarbeiten ist. Dies ist mit den meisten Kameras und Fernsehkameras ohne weiteres möglich; insbesondere haben selbst Vidikon-Fernsehkameras noch eine ausreichende Empfindlichkeit im nahen Infrarotbereich und einen ausreichenden Dynamik-Umfang. Der Aufwand für das Wegfiltern der störenden Spektralbereiche ist sehr gering, und eine zusätzliche Beleuchtungseinrichtung ist im wesentlichen nur für die Überwachung des Arbeitsbereichs bei fehlendem Schweißvorgang erforderlich und braucht dafür nur eine Beleuchtungsstärke im nahen Infrarot zu erzeugen, die eine zum Überwachen und Beobachten bei fehlendem Schweißvorgang noch ausreichende Leuchtdichte des Arbeitsbereiches sicherstellt. Dafür genügen bei im Handel erhältlichen Infrarotleuchten Leistungen im Bereich üblicher Kleinbild-Projektionsleuchten, insbesondere Infrarot-Hohlspiegelleuchten mit einer Leistung im Bereich von etwa 50 bis 200 Watt. Da die von der Beleuchtungseinrichtung dann ausgehende Wärmeleistung nur gering ist, bedarf es keines besonderen Aufwandes zur Abfuhr der Gesamt-Wärmeleistung aus dem Arbeitsbereich, und man kann die zur Beleuchtung und Bilderzeugung dienenden Einrichtungen verhältnismäßig nahe am Arbeitsbereich anordnen. Es ist dabei zweckmäßig, die Kamera selbst vom Arbeitsbereich entfernt anzuordnen, um die Kamera vor der Schmutz- und Wärmeentwicklung im Arbeitsbereich zu schützen, und zwischen der Kamera und im Arbeitsbereich eine Bildleitereinrichtung vorzusehen. Eine solche Bildleitereinrichtung weist zweckmäßigerweise einen flexiblen Faser-Bildleiter auf; dadurch kann das dem Arbeitsbereich zugewandte Ende des Bildleiters beliebig relativ zu dem Arbeitsbereich eingestellt werden.

Meist ist es zweckmäßig, auch die Beleuchtungseinrichtung so auszuführen, daß die darin vorgesehene Leuchte vom Arbeitsbereich entfernt ist und leicht ausgewechselt werden kann. Zu diesem Zweck weist vorzugsweise die Beleuchtungseinrichtung einen Lichtleiter auf. Damit das dem Arbeitsbereich zugewandte Ende des Lichtleiters bequem und universell eingestellt werden kann, ist zweckmäßigerweise der Lichtleiter flexibel. Eine besonders einfach zu handhabende Ausführungsform ist dann dadurch gekennzeichnet, daß die dem Arbeitsbereich zugewandten Enden des Lichtleiters und des Bildleiters an einem beweglichen Gerätekopf angeordnet sind; man braucht dann nur den Gerätekopf zu verstellen.

Die Verwendung eines Spektralbereiches im nahen, also dem sichtbaren Spektralbereich benachbarten Infrarot, bietet den Vorteil, daß normale, für den sichtbaren Spektralbereich vorgesehene optische Einrichtungen sowie Kameras verwendbar sind, die zumeist im nahen Infrarot noch ausreichende Durchlässigkeit bzw. Empfindlichkeit aufweisen. Die Verwendung spezieller Infrarot-Betrachtungsgeräte kann daher entfallen. Vorteile ergeben sich auch hinsichtlich der Beleuchtungseinrichtung. Normale Glühfadenlampen können leicht so betrieben werden, daß ihr Strahlungsmaximum im nahen Infrarot liegt; es ist daher kein besonderer Aufwand für die Beleuchtungseinrichtung erforderlich. Die erfindungsgemäße Vorrichtung ist mit ganz besonderem Vorteil beim Lichtbogen- oder Plasma-Schweißen anwendbar, weil dort der Lichtbogen bzw. das Plasma besonders stark im Ultravioletten und im Sichtbaren emittiert.

EP-A-92753 beschreibt einen Infrarot-Sensor für Lichtbogenschweißen. Dabei wird Infrarotstrahlung einer Wellenlänge über etwa 3 um verwendet, also nicht nahes Infrarot, und demgemäß können keine üblichen optischen Bauteile und Fersehkameras verwendet werden.

JP-A-5 693 771 beschreibt ein Beobachtungssystem, bei dem ein reelles Zwischenbild erzeugt und durch ein diesem Zwischenbild benachbartes Filter aus photochromem Material von einer Fernsehkamera aufgenommen wird. Die gewünschte Kontrastminderung ergibt sich dabei durch die zu dem Zwischenbild inverse Dichteverteilung des photochromen Filters. Ein zusätzliches Infrarot-Filter dient offenbar als Wärmeschutz, d.h. es ist für Infrarot undurchlässig.

Die Erfindung wird im folgenden anhand von Ausführungsbeispielen in Verbindung mit der Zeichnung näher beschrieben.

Figur 1 ist eine schematische Darstellung, teilweise nach Art eines Vertikalschnitts, einer erfindungsgemäßen Vorrichtung.

Figur 2 zeigt in ähnlicher schematischer Darstellung wie Figur 1 eine andere Ausführungsform ein erfindungsgemäßen Vorrichtung.

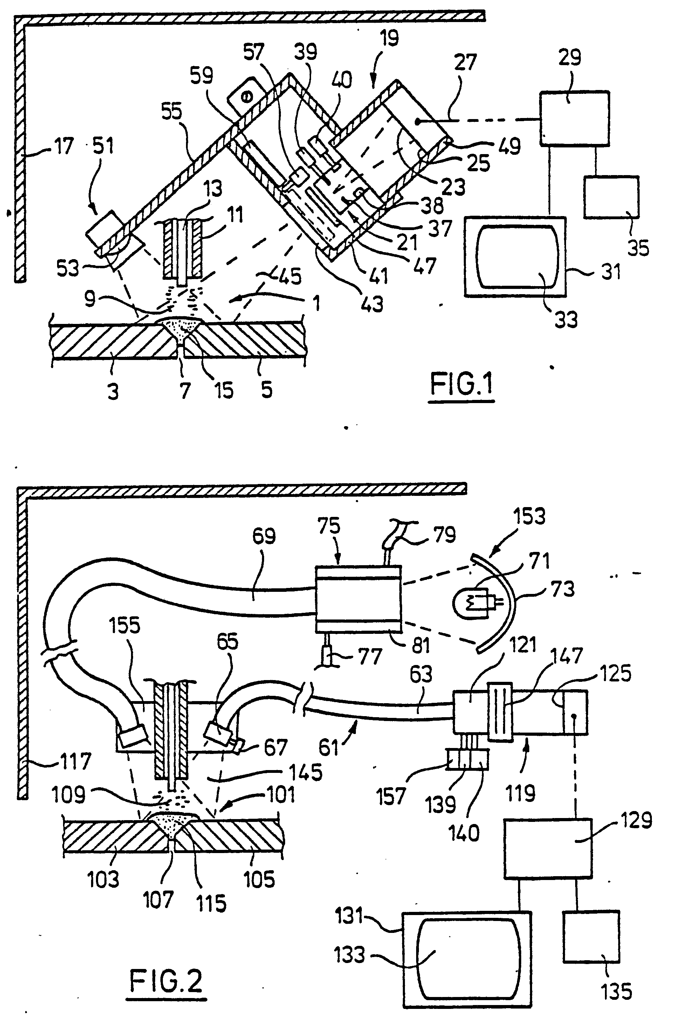

Die in Figur 1 dargestellte Vorrichtung dient zum Überwachen eines in dem Arbeitsbereich 1 ablaufenden Schweißvorganges, mit dem zwei Werkstücke 3, 5 in einer Schweißfuge 7 miteinander verschweißt werden. Es kann sich dabei beispielsweise um eine Schweißung in einem unzugänglichen Bereich eines Kernreaktor-Bauteils handeln. In Figur 1 ist angenommen, daß es sich um eine Lichtbogenschweißung handelt. Ein Lichtbogen 9 zwischen einer von einem Mantel 11 umgebenen Schweißelektrode 13 und den Werkstücken 3 und 5 erzeugt eine Schmelze 15.

Die Schweißstelle kann durch eine Abschirmwand 17 gegen Fremdlicht geschützt sein.

Die Vorrichtung enthält eine Fernsehkamera 19, die so ausgebildet und angeordnet ist, daß sie ein Bild des Arbeitsbereichs 1 mit Hilfe der von dort während des Schweißvorganges emittierten Strahlung erzeugt. Bei der dargestellten Ausführungsform wird von einem Kameraobjektiv 21 ein optisches Bild 23 auf einer Empfangsfläche 25 erzeugt. Aus der Empfangsfläche 25 wird das optische Bild 23 elektronisch ausgelesen und in Form von Video-Signalen über ein abgeschirmtes Koaxialkabel 27 einem Kamera-Steuergerät 29 zugeführt. Dieses steuert einen Monitor 31 und erzeugt dort auf einem Bildschirm 33 ein schwarzweißes oder farbiges zweites optisches Bild 33. Das Kamera-Steuergerät 29 kann weitere Signalverarbeitungseinrichtungen 35 ansteuern. Das Kamera-Objektiv 21 enthält ferner eine Blende 37 und eine Fokussiereinrichtung 38, die von je einem Einstellmotor 39 bzw. 40 feineinstellbar sind. Die Kamera 19 ist von einem Schutzgehäuse 41 umgeben, in welchem ein leicht zu reinigendes oder auszuwechselndes Fenster 43 für den Durchtritt des abbildenden Strahlenganges 45 angeordnet ist.

Der Kamera 19 ist ein optisches Filter 47 zum Abschwächen der vom Arbeitsbereich her ankommenden Strahlung vorgeschaltet. Bei der dargestellten Ausführungsform ist dieses Filter 47 vor dem Kamera-Objektiv 21 angeordnet. Dieses Filter ist in einem infraroten Spektralbereich durchlässig. Die Kamera 19 hat eine in diesem Spektralbereich ausreichende Empfindlichkeit. Beispielsweise kann das Filter ein Langpaß-Kantenfilter mit einer Kante bei 800 nm sein, und bei der Kamera 19 kann es sich um eine Schwarzweiß- oder Farbfernsehkamera handeln.

Im Betrieb wird bei eingeschaltetem Schweißvorgang die von dem Lichtbogen 9 ausgehende starke Strahlung im ultravioletten und sichtbaren Teil des Spektrums von dem optischen Filter 47 praktisch vollständig absorbiert, so daß das Bild 23 oder 33 nur mit Hilfe der vom Arbeitsbereich 1 ausgehenden Infrarot-Strahlung erzeugt wird.

Damit die Kamera 19 nicht durch die beim Lichtbogenschweißen entstehenden magnetischen Felder gestört wird, kann sie mit einer magnetischen Abschirmung 49 versehen sein.

Das beschriebene optische Filter 47 ist in einem etwa bis zum langwelligen Ende des sichtbaren Spektrums reichenden Spektralbereich durchlässig. Um die in die Kamera eintretende Strahlung noch genauer auf den für die Bilderzeugung maßgeblichen Spektralbereich zu beschränken, kann das Filter auch ein Bandpaßfilter sein, das in einem Spektralbereich von etwa 800... nm durchlässig ist.

Bei der in Figur 1 dargestellten Ausführungsform ist ferner eine Beleuchtungseinrichtung 51 vorgesehen, mit der der Arbeitsbereich 1 mit einer Beleuchtungsstärke beleuchtet wird, die bei fehlendem Schweißvorgang zur Erzeugung eines brauchbaren Bildes 23 bzw. 33 ausreicht. Die Beleuchtungseinrichtung enthält eine bevorzugt im nahen Infrarot emittierende Infrarotleuchte 53. Die Leuchte 53 und die Kamera 19 sind an einem Gerätekopf 55 befestigt, der durch nicht dargestellte Mittel relativ zu dem Arbeitsbereich 1 verstellbar ist.

Im Betrieb wird durch die Beleuchtung mittels der Beleuchtungseinrichtung 51 erreicht, daß der Maximalwert des auf dem Arbeitsbereich 1 abzubildenden Leuchtdichte-Verhältnisses weiter verkleinert wird. Bei ausreichend hoher Leistung der Beleuchtungseinrichtung 51 kann dadurch auch noch der Zustand bei fehlendem Schweißvorgang als erkennbares Bild 23 bzw. 33 dargestellt werden. Da die sehr starke ultraviolette und sichtbare Strahlung, die von dem Schweiß-Lichtbogen 9 während des Schweißvorganges ausgeht, für die Bilderzeugung unwirksam gemacht ist, braucht die Beleuchtungseinrichtung 51 keine damit vergleichbare Leistung zu haben; es hat sich gezeigt, daß in der Praxis Leistungen ausreichen, wie sie in üblichen Heim-Kleinbildprojektoren für die Projektionslampe in Frage kommen, insbesondere also im Bereich zwischen etwa 50 und 200 Watt.

Bei der in Fig. 1 dargestellten Ausführungsform ist der Kamera 19 mit Hilfe eines Stellmotors 57 ein weiteres Filter 59 zur allgemeinen Abschwächung der der Kamera zugeführten Strahlung wahlweise zusätzlich vorschaltbar. Dieses weitere Filter 59 kann beispielsweise zusammen mit dem Schweißvorgang ein- und ausschaltbar sein, so daß die Kamera-Empfindlichkeit bei fehlendem Schweißvorgang automatisch erhöht ist und somit eine geringere Leistung für die Beleuchtungseinrichtung 51 ausreicht.

Falls die verwendete Kamera 19 ihre maximale Empfindlichkeit außerhalb des von dem optischen Filter 47 durchgelassenen infraroten Spektralbandes hat, kann zusätzlich ein weiteres Filter (nicht dargestellt) vorgesehen werden, um die Empfindlichkeit der Kamera in dem Spektralbereich der maximalen Empfindlichkeit herabzusetzen. Dadurch kann mit Sicherheit verhindert werden, daß restliche Anteile von ultraviolettem oder sichtbarem Licht, die das optische Filter 47 passieren, zu Störungen führen können.

Figur 2 zeigt eine Ausführungsform, die grundsätzlich derjenigen nach Figur 1 gleicht. Teile, die in entsprechender Funktion bereits in Figur 1 vorkommen, sind in Figur 2 mit denselben Bezugszeichen wie in Figur 1 bezeichnet, jedoch unter Voranstellung der Ziffer 1. Insoweit wird, um Wiederholungen zu vermeiden, auf die obige Beschreibung zu Figur 1 verwiesen.

Bei der Ausführung nach Figur 2 ist die Kamera 119 weiter vom Arbeitsbereich 101 entfernt, und zwischen der Kamera und dem Arbeitsbereich ist eine Bildleitereinrichtung 61 vorgesehen. Die Bildleitereinrichtung 61 enthält einen flexiblen Faserbildleiter 63. An dem dem Arbeitsbereich 101 zugewandten Ende der Bildleitereinrichtung ist ein Endoskop-Objektiv 65 vorgesehen, und an seinem der Kamera 101 zugewandten Ende ist die Bildleitereinrichtung an ein Kameraobjektiv 121 angekoppelt. Das zum Ausfiltern des ultravioletten und sichtbaren Spektralbereichs dienende optische Filter 147 ist in der Austrittspupille des Kameraobjektivs 121 angeordnet. Dadurch werden Ungleichmäßigkeiten der Filterwirkung über die Filterfläche ausgeglichen.

Da bei der Ausführungsform nach Figur 2 die Kamera entfernt vom Arbeitsbereich 101 angeordnet ist und somit nur das dem Arbeitsbereich zugewandte Ende des Bildleiters 63 den Einwirkungen aus dem Arbeitsbereich 101 ausgesetzt ist, kann dieses, hier mit dem Endoskop-Objektiv 65 versehene Ende verhältnismäßig nahe am Arbeitsbereich 101 angeordnet werden. Das Endoskop-Objektiv 65 kann eine sehr kurze Brennweite haben, zum Beispiel 10 mm, und einen entsprechend großen Bildwinkel; im Normalfall kann damit der gesamte Arbeitsbereich 101, der im wesentlichen der Größe der jeweils vorliegenden Schweißstelle entspricht, auf den Eingang des Bildleiters 63 abgebildet werden. Das Reinigen und/oder Auswechseln des Endoskop-Objektivs 65 macht keine besonderen Schwierigkeiten und kann deshalb öfter vorgenommen werden. Das dem Arbeitsbereich 1 zugewandte Ende des Bildleiters 63 ist in einem Gerätekopf 155 angeordnet, der relativ zum Arbeitsbereich 101 verstellbar ist (nicht dargestellt). Falls erforderlich, kann das Endoskop-Objektiv mit einer Fokus-Einstelleinrichtung 67 versehen sein.

Für den flexiblen Bildleiter 63 können handelsübliche Ausführungen verwendet werden, beispielsweise mit einer Auflösung von 650 x 650 Bildpunkten, so daß die Auflösung eines normalen Fernseh-Monitors übertroffen wird. Der Ausgang des Bildleiters 63 wird mit dem Kamera-Objektiv 121, das vorzugsweise mit hoher Lichtstärke ausgeführt ist, auf die Empfangsfläche 125 der Kamera 119 abgebildet, und zwar beispielsweise im Maßstab 1 : 2. Die Lichtmengenregelung kann mit der Blende des Kamera-Objektivs erfolgen, bei der dargestellten Ausführungsform mittels des Blenden-Einstellmotors 139. Die Fokussierung des Ausgangs des Bildleiters 63 auf die Kamera 119 ist nur bei der Montage des Gesamtsystems erforderlich und wird fest eingestellt.

Bei der Ausführungsform nach Figur 2 weist die Beleuchtungseinrichtung 151 einen Lichtleiter 69 auf, damit die Leuchte 153 entfernt vom Arbeitsbereich 101 angeordnet werden kann.

Dadurch ist man in der Gestaltung der Leuchte freier. Die Leuchte 153 enthält bei der dargestellten Ausführungsform eine Glühfadenlampe 71 und einen selektiv im nahen Infrarot reflektierenden Reflektor 73. Mit dem Reflektor 73 wird die von der Glühfadenlampe 71 erzeugte Strahlung in den Eingang des Lichtleiters 69 geleitet. Bei der dargestellten Ausführungsform ist im Eingang des Lichtleiters 69 eine kühlbare Kollimationseinrichtung 75 angeordnet, durch die die unter größeren Einfallswinkeln eintretende Lichtstrahlung vor dem Eintritt in den Lichtleiter 69 absorbiert wird. Die absorbierte Leistung wird mit Kühlmittel abgeführt, beispielsweise Wasser, das über eine Zuleitung 77 und eine Ableitung 79 durch einen Kühlmantel 81 geleitet wird. Durch das Vorschalten der Kollimationseinrichtung wird verhindert, daß im Eingang des Lichtleiters 69 eine so große Erwärmung eintritt, daß dort der Lichtleiter oder darin verwendete Materialien, beispielsweise Kunststoff-Kitt, beschädigt werden.

Bei der dargestellten Ausführungsform wird ein flexibler Lichtleiter 69 verwendet; wie im Fall des flexiblen Bildleiters 63 bietet dies den Vorteil, daß das dem Arbeitsbereich 101 zugewandte Ende des Lichtleiters 69 freizügig verstellt werden kann.

Bei der in Figur 2 dargestellten Ausführungsform sind die dem Arbeitsbereich 108 zugewandten Enden des Bildleiters 63 und des Lichtleiters 69 beide an dem beweglichen Gerätekopf 155 angeordnet, so daß sie gemeinsam und in richtiger Zuordnung zueinander bewegt werden können.

## Patentansprüche

1. Vorrichtung zum Überwachen eines in einem Arbeitsbereich ablaufenden Schweißvorganges, mit einer Kamera (19), vorzugsweise Fernsehkamera, zum Erzeugen eines Bildes des Arbeitsbereichs mit Hilfe von dort während des Schweißvorganges emittierter Strahlung, und einem der Kamera (19) vorgeschalteten optischen Filter (47) zum Abschwächen der Strahlung, wobei vorzugsweise ferner eine Beleuchtungseinrichtung zum Beleuchten des Arbeitsbereichs mit einer bei fehlendem Schweißvorgang zur Erzeugung des Bildes ausreichenden Beleuchtungsstärke vorgesehen ist, dadurch gekennzeichnet, daß das Filter (47) ein Bandpaßfilter ist, das nur im nahen Infrarot in einem Spektralbereich von etwa 800... 1000 nm durchlässig ist, und daß als Kamera eine in diesem Spektralbereich empfindliche Kamera (19) vorgesehen ist.

2. Vorrichtung nach Anspruch 1, dadurch gekennzeichnet, daß bei Verwendung einer Kamera, die ihre maximale Empfindlichkeit außerhalb des von dem Filter durchgelassenen infraroten Spektralbereichs hat, ein weiteres Filter zur Herabsetzung der Empfindlichkeit der Kamera in dem Spektralbereich der maximalen Empfindlichkeit vorgesehen ist.

3. Vorrichtung nach einem der vorhergehenden Ansprüche, dadurch gekennzeichnet, daß ein weiteres Filter (43) zur allgemeinen Abschwächung der der Kamera zugeführten Strahlung vorgesehen ist.

4. Vorrichtung nach einem der vorhergehenden Ansprüche, mit Beleuchtungseinrichtung, dadurch gekennzeichnet, daß die Beleuchtungseinrichtung (51) eine bevorzugt im nahen Infrarot emittierende Infrarotleuchte (53) aufweist.

5. Vorrichtung nach Anspruch 4, dadurch gekennzeichnet, daß die Infrarotleuchte (153) eine Hohlspiegelleuchte mit einer Leistung im Bereich von etwa 50 bis 200 Watt ist.

6. Vorrichtung nach einem der vorhergehenden Ansprüche mit einer Beleuchtungseinrichtung, dadurch gekennzeichnet, daß die Infrarotleuchte (153) einen Lichtleiter (69) aufweist.

7. Vorrichtung nach Anspruch 6, dadurch gekennzeichnet, daß im Eingang des Lichtleiters (69) eine kühlbare Kollimationseinrichtung (75) vorgesehen ist.

8. Vorrichtung nach einem der vorhergehenden Ansprüche, dadurch gekennzeichnet, daß zwischen der Kamera (119) und dem Arbeitsbereich (101) eine Bildleitereinrichtung (61) vorgesehen ist.

9. Vorrichtung nach Anspruch 8, dadurch gekennzeichnet, daß die Bildleitereinrichtung (61) einen flexiblen Faser-Bildleiter (63) aufweist, der an seinem dem Arbeitsbereich (101) zugewandten Ende ein Endoskop-Objektiv (65) aufweist und an seinem der Kamera (119) zugewandten Ende an ein Kamera-Objektiv (121) angekoppelt ist.

10. Vorrichtung nach Anspruch 9, dadurch gekennzeichnet, daß das Filter (147) in der Austrittspupille des Kameraobjektivs (121) angeordnet ist.

11. Vorrichtung nach Anspruch 9 oder 10, dadurch gekennzeichnet, daß das Kameraobjektiv (21) feineinstellbar ist.

12. Vorrichtung nach einem der vorhergehenden Ansprüche, gekennzeichnet durch ihre Anwendung beim Lichtbogen- oder Plasma-Schweißen.

## Claims

1. An apparatus for monitoring a welding process taking place in a working area comprising a camera (19) preferably a television camera for producing an image of the working area by means of radiation emitting thereof during the welding process; an optical filter (47) arranged in front of the camera (19) to attenuate the radiation, further preferably providing an illumination device for illuminating the working area with a lighting intensity sufficient to enable the image to be produced when the welding process is not in operation, characterized in that the filter (47) is a bandpass filter which is transparent only in the near infrared in a spectral range of about 800 to 1000 nm, and that a camera (18) is provided sensitive within said spectral range.

2. An apparatus according to claim 1, characterized in that when using a camera having its maximum sensitivity outside the infrared spectral range being passed by the filter, a further filter is provided for reducing the sensitivity of the camera in its spectral range of maximum sensitivity.

3. An apparatus according to any of the preceding claims, characterized in that a futher filter (43) is provided for generally reducing the radiation impinging on the camera.

4. An apparatus including an illumination device, characterized in that the illumination device (51) comprises an infrared illumination source (53), preferably emitting in the near infrared range.

5. An apparatus according to claim 4, characterized in that the infrared illumination device (153) is a concave reflector illumination lamp having a power in the range of about 50 to 200 watts.

6. An apparatus according to any of the preceding claims, including an illumination device, characterized in that the infrared illumination lamp (153) comprises a light conductor (69).

7. An apparatus according to claim 6, characterized in that in the entrance area of the light conductor (69) a collimator device (75) is provided adapted to be cooled.

8. An apparatus according to any of the preceding claims, characterized in that between the camera (119) and the working area (101) an image conductor device (61) is provided.

9. An apparatus according to claim 8, characterized in that the image conductor device (61) comprises a flexible fiber optic image conductor (63) which at its end extending to the working area (101) comprises an endoscopic lens (65) and at its end extending to the camera (119) is coupled to a camera lens (121).

10. An apparatus according to claim 8, characterized in that the filter (147) is positioned in the diaphragm of the camera lens (121).

11. An apparatus according to claim 8 or 10, characterized in that the camera lens is fine-adjustable.

12. An apparatus according to any of the preceding claims, characterized in that it is applicable to arc welding and plasma welding.

## Revendications

1. Dispositif de surveillance d'une opération de soudage se déroulant dans une zone de travail, comportant une caméra (19), de préférence une caméra de télévision, destinée à produire une image de la zone de travail à l'aide de rayonnement émis dans celle-ci pendant l'opération de soudage, et un filtre optique (47) placé devant cette caméra (19) pour affaiblir le rayonnement, un dispositif d'éclairage destiné à éclairer la zone de travail avec une intensité suffisante pour la production de l'image en l'absence d'opération de soudage, étant de préférence en outre prévu, caractérisé en ce que le filtre (47) est un filtre passe-bande qui est passant seulement dans l'infrarouge proche dans un domaine spectral allant de 800 à 1000 nm environ, et comme caméra, il est prévu une caméra (79) dans sensible ce domaine spectral.

2. Dispositif selon la revendication 1, caractérisé en ce qu'en cas d'utilisation d'une caméra qui a sa sensibilité maximale en dehors du domaine spectral infrarouge transmis par le filtre, il est prévu un filtre supplémentaire destiné à réduire la sensibilité de la caméra dans le domaine spectral où celle-ci a sa sensibilité maximale.

3. Dispositif selon l'une des revendications précédentes, caractérisé en ce qu'il est prévu un filtre supplémentaire (43) pour l'affaiblissement général du rayonnement allant à la caméra.

4. Dispositif selon l'une des revendications précédentes et comportant un dispositif d'éclairage, caractérisé en ce que ce dispositif d'éclairage (51) comprend une lampe à rayonnement infrarouge (53) émettant de préférence dans l'infrarouge proche.

5. Dispositif selon la revendication 4, caractérisé en ce que l'appareil d'éclairage à rayonnement infrarouge (153) est un appareil d'éclairage à miroir concave ayant une puissance d'environ 50 à 200 watts.

6. Dispositif selon l'une des revendications précédentes, comportant un dispositif d'éclairage, caractérisé en ce que l'appareil d'éclairage à rayonnement infrarouge (153) comprend un conducteur de lumière (69).

7. Dispositif selon la revendication 6, caractérisé en ce que l'entrée du conducteur de lumière (69) est pourvue un dispositif collimateur à refroidissement (75).

8. Dispositif selon l'une des revendications précédentes, caractérisé en ce qu'un dispositif conducteur d'image (61) est prévu entre la caméra (119) et la zone de travail (101).

9. Dispositif selon la revendication 8, caractérisé en ce que le dispositif conducteur d'image (61) comprend un conducteur d'image flexible (63) formé de fibres, pourvu d'un objectif d'endoscope (65) à son extremité voisine de la zone de travail (101) et accouplé à un objectif de caméra (121) à son extrémité voisine de la caméra (119).

10. Dispositif selon la revendication 9, caractérisé en ce que le filtre (147) est placé dans la pupille de sortie de l'objectif de caméra (121).

11. Dispositif selon l'une des revendications 9 et 10, caractérisé en ce que l'objectif de caméra (21) est à réglage fin.

12. Dispositif selon l'une des revendications précédentes, caractérisé par son utilisation dans le soudage à l'arc ou au plasma.

0 160 687

FIG.1

FIG.2